# FASCICULE DE BREVET EUROPEEN

(11) **EP 0 401 742 B1**
(45) Date de publication et mention de la délivrance du brevet: **08.09.1993**
(21) Numéro de dépôt: 90110603.9
(22) Date de dépôt: 05.06.1990
(51) Int. Cl.: C03B 37/014, C03B 37/018

(54) **Procédé et dispositif de depot externe par plasma de silice exempte d'ions hydroxyles**
Verfahren und Vorrichtung zur Plasmaaussenabscheidung von hydroxylionenfreier Silika
Process and apparatus for plasma outside deposition of silica free from hydroxyl ions

(30) Priorité: 05.06.1989 FR 8907391
(43) Date de publication de la demande: 12.12.1990
(73) Titulaire: ALCATEL ALSTHOM COMPAGNIE GENERALE D'ELECTRICITE, 75382 Paris Cédex 08 (FR)
(72) Inventeur: Le Sergent, Christian, F-91460 Marcoussis (FR)
(74) Mandataire: Weinmiller, Jürgen

(56) Documents cités:
- EP-A- 0 054 495
- EP-A- 0 141 365
- EP-A- 0 231 022
- DE-A- 3 404 119
- DE-A- 3 420 790
- US-A- 4 162 908
- PATENT ABSTRACTS OF JAPAN, vol. 10, no. 71 (C-334)[2128], 20 mars 1986; & JP-A-60 210 540 (SUMITOMO DENKI KOGYO K.K.) 23-10-1985

## Description

L'invention concerne un procédé de dépôt externe par plasma sur un barreau de silice, éventuellement dopée en vue de modifier son indice de réfraction, sensiblement exempte d'ions hydroxyles, par réaction d'un composé de silicium, tel que SiC1₄ par exemple, et éventuellement de composés dopants, sur de l'oxygène en présence d'un plasma créé par induction à l'aide d'un générateur à haute fréquence. Elle s'étend en outre à un dispositif pour la mise en oeuvre de ce procédé.

Ce procédé et ce dispositif servent notamment à la fabrication de préformes destinées à être par la suite transformées par étirage en fibres optiques pour câbles de télécommunications. On sait que le coefficient d'affaiblissement linéaire de telles fibres optiques dépend étroitement de la teneur de la silice qui les constitue en ions hydroxyles, ceux-ci entraînant une certaine absorption du rayonnement dans les domaines de longueurs d'onde du rayonnement habituellement transmis par les fibres, notamment à 1,4 micron.

On peut éviter dans une très large mesure la présence d'ions hydroxyles dans une couche de silice déposée à l'intérieur d'un tube maintenu en rotation et chauffé à l'extérieur par un chalumeau en translation le long du tube, du fait que l'on peut contrôler le caractère parfaitement sec des réactifs gazeux introduits dans le tube pour amener le dépôt de silice sur sa paroi interne. Il n'en est plus de même lorsque l'on veut effectuer le dépôt de silice sur la surface externe d'un mandrin, réchauffé par l'arrivée sur sa surface d'un plasma de gaz à très haute température en même temps que des gaz réactifs devant donner naissance à la silice à déposer.

Ce dépôt peut s'effectuer sur toute la surface externe du mandrin, celui-ci étant en rotation autour de son axe et en translation vis-à-vis des arrivées de plasma et de gaz réactifs.

Il peut s'effectuer également, comme cela est décrit dans la demande de brevet EP-0054495, sur l'extrémité du mandrin, le plasma de gaz et l'injection de réactifs étant alors dirigés sur cette extrémité du mandrin, en général pour obtenir un barreau de silice pure. Dans ce cas, la mandrin, la torche à plasma et l'injecteur de réactifs sont disposés dans une enceinte pratiquement close qui les abrite de l'atmosphère ambiante.

Dans les deux cas précédents, on ne peut éviter la présence d'humidité à proximité du mandrin, et par suite la présence d'ions hydroxyles dans la silice déposée sur le mandrin, les teneurs minimales en ions hydroxyles dans la silice obtenue ne descendant pas en pratique au-dessous de quelques dizaines de parties par million.

La présente invention a pour but de fabriquer des barreaux comportant une couche externe de silice sensiblement exempte d'ions hydroxyles, ou des barreaux de silice sensiblement exempts de ces ions, susceptibles de permettre par la suite la fabrication de fibres optiques à très faible coefficient d'affaiblissement linéaire.

La présente invention propose à cet effet un procédé de dépôt externe par plasma sur un barreau de silice sensiblement exempte d'ions hydroxyles, éventuellement dopée en vue de modifier son indice de réfraction, par réaction sur de l'oxygène d'un composé du silicium, et éventuellement de composés dopants, en présence d'un plasma de gaz porté à très haute température par induction à l'aide d'un générateur à haute fréquence, le barreau sur lequel est effectué le dépôt de silice étant maintenu dans une enceinte étanche séparée de l'atmosphère ambiante, caractérisé en ce que ladite enceinte est alimentée en air atmosphérique que l'on soumet successivement à une filtration, à une compression et à une réfrigération, à une purge de l'eau condensée, puis à une dessiccation finale par adsorption.

Le dispositif selon l'invention, comprenant un barreau de réception du dépôt de silice, un support assurant sa rotation et sa translation, une torche d'arrivée de gaz plasmagène, une bobine d'induction alimentée par un générateur à haute fréquence autour de l'extrémité de la torche, et une buse d'injection vers le barreau d'un mélange d'oxygène et d'un composé du silicium, et éventuellement de composés dopants, l'ensemble de ces organes étant disposé à l'intérieur d'une enceinte étanche séparée de l'atmosphère ambiante, est caractérisé en ce que l'enceinte est alimentée en air atmosphérique par un conduit muni d'au moins un filtre, un compresseur, un réfrigérant, un purgeur de l'eau condensée et un lit adsorbeur de l'humidité résiduelle.

Il est décrit ci-après, à titre d'exemples et en référence aux figures schématiques du dessin annexé, des installations de dépôt de silice sur un mandrin et une ligne de dessiccation d'air selon le procédé de l'invention.

La figure 1 représente une installation de dépôt de silice dopée sur tout le pourtour d'un mandrin de silice animé d'une rotation autour de son axe et d'une translation perpendiculairement aux arrivées du plasma et des gaz réactifs.

La figure 2 représente une installation de dépôt de silics pure sur l'extrémité d'un mandrin de silice en rotation autour de son axe et animé d'une translation lente l'éloignant des arrivées du plasma et des gaz réactifs au fur et à mesure de la croissance du dépôt.

La figure 3 représente une ligne de dessiccation d'air alimentant l'enceinte fermée entourant le mandrin, la torche à plasma et l'injecteur de gaz réactifs.

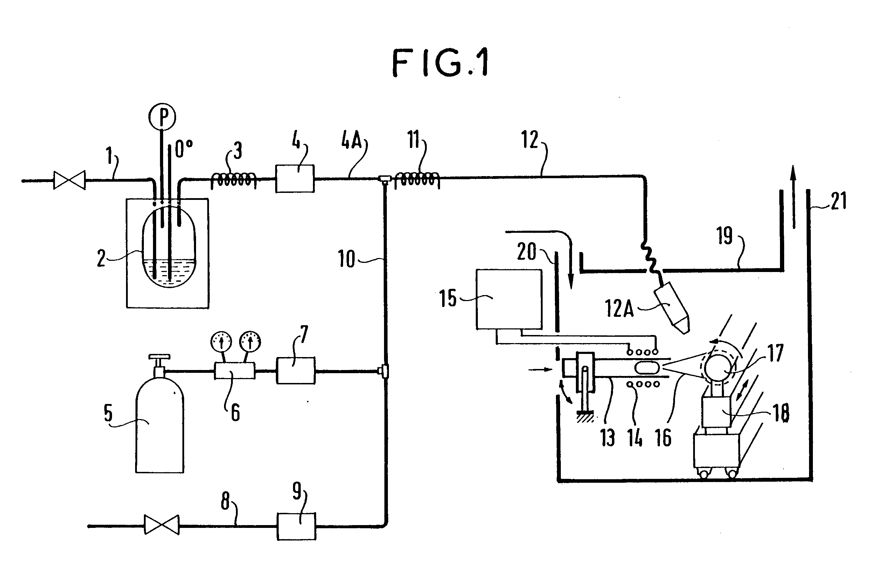

Dans la figure 1, un conduit 1 sert à l'introduction de tétrachlorure de silicium dans un évaporateur 2, maintenu à une température aussi constante que possible. Le tétrachlorure de silicium vaporisé passe dans un réchauffeur 3, puis dans un contrôleur de débit 4 et un conduit 4A. Simultanément, un gaz fluoré tel que du dichlorodifluorométhane, issu d'une bouteille 5, se rend par un contrôleur de pression 6 et un contrôleur de débit 7 à un conduit 10 rejoignant le conduit 4A d'arrivée de tétrachlorure de silicium gazeux, de même qu'un courant d'oxygène arrivant par un conduit 8 et un contrôleur de débit 9. Les gaz réactifs sont réchauffés dans un réchauffeur 11, puis se rendent par le conduit 12 à l'injecteur 12A d'amenée des gaz réactifs au contact du plasma et du mandrin à recouvrir d'une couche de silice dopée au fluor.

Par ailleurs, un gaz plasmagène tel que de l'oxygène, de l'azote ou de l'argon, est introduit dans une torche 13, dont l'extrémité est entourée par un bobinage 14 alimenté en courant à haute fréquence par le générateur 15. Le plasma de gaz ionisé à haute température forme un dard 16 débouchant sur le pourtour du mandrin 17. Ce dernier tourne autour de son axe et est entraîné par un support 18 dans une translation régulière dans une direction perpendiculaire aux arrivées de plasma et gaz réactifs. Le mandrin, la torche et l'injecteur de gaz réactifs sont disposés dans une enceinte fermée 19 reliée d'une part à une tubulure d'arrivée d'air sec 20, d'autre part à un conduit 21 d'évacuation de gaz résiduaires, relié à une installation d'épuration des gaz évacués.

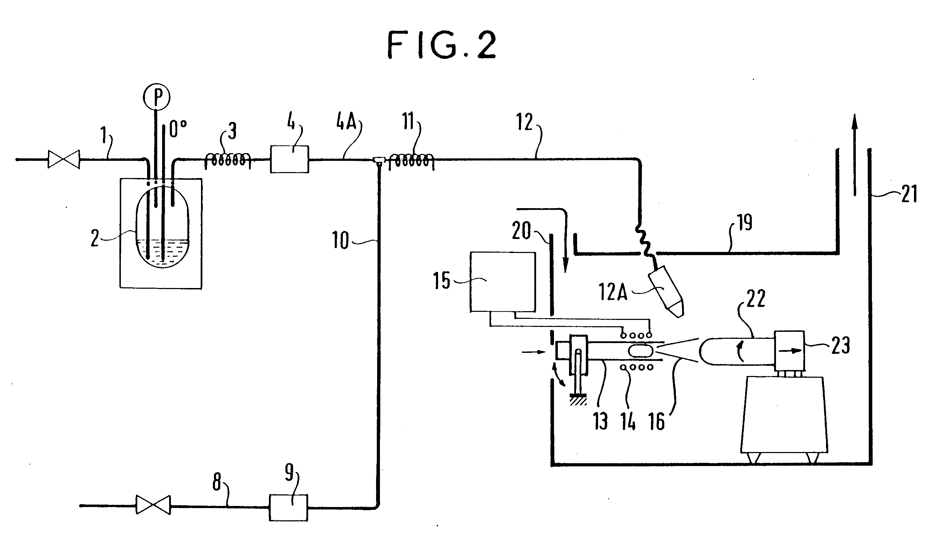

L'installation de dépôt de silice pure sur l'extrémité d'un mandrin de la figure 2 est analogue dans une large mesure à celle de la figure 1. L'alimentation en tétrachlorure de silicium à partir de l'évaporateur 2 est similaire. Le dépôt devant être de la silice pure, le seul autre gaz réactif est de l'oxygène arrivant par le conduit 8, le contrôleur de débit 9 et le conduit 10. Les gaz réactifs réchauffés dans le réchauffeur 11 se rendent par le conduit 12 à l'injecteur 12A.

Par ailleurs, un gaz plasmagène est introduit dans la torche à plasma 13 entourée par le bobinage 14 alimenté en courant à haute fréquence par le générateur 15. Il se forme à la sortie de la torche 13 un dard de plasma à très haute température 16 débouchant sur l'extrémité du mandrin 22, ce dernier tournant autour de son axe et étant entraîné par son support 23 dans une translation lente l'éloignant progressivement de la torche et de l'injecteur de gaz réactifs au fur et à mesure du dépôt de silice sur l'extrémité du mandrin.

Comme précédemment, le mandrin, la torche à plasma et l'injecteur sont à l'intérieur d'une enceinte fermée 19, alimentée en air desséché par la tubulure 20 et rejetant le gaz résiduaire vers une installation de traitement par un conduit 21.

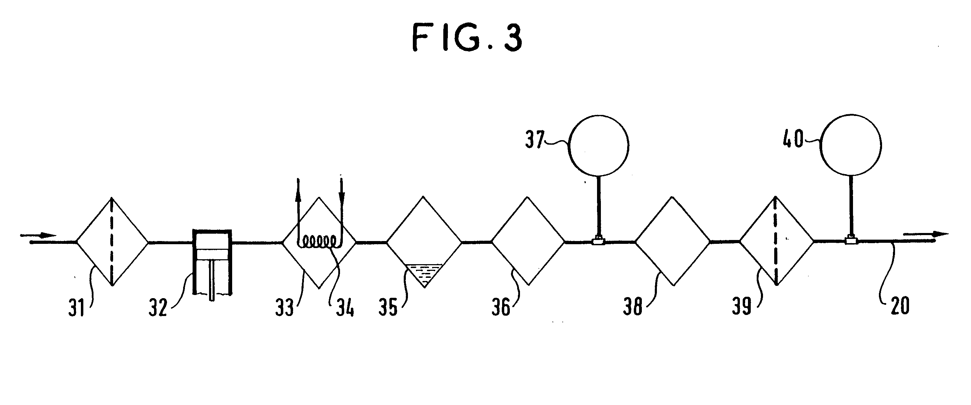

Dans la ligne de dessiccation d'air représentée en figure 3, l'air atmosphérique subit une première épuration, destinée à en éliminer les poussières, les vapeurs organiques (huiles) et chlorhydriques, sur un filtre à charbon actif 31. Il passe dans un compresseur 32 puis dans un réfrigérant à eau 33, où il est refroidi par contact indirect avec un serpentin de circulation d'eau froide 34. Il se rend dans un purgeur 35 d'élimination de l'eau condensée, puis dans un adsorbeur 36 d'élimination de l'humidité, constitué par exemple d'une zéolithe. Il est relié en aval de cet adsorbeur à un réservoir tampon 37, puis passe dans un adsorbeur final 38 et un filtre final 39 à un réservoir 40 d'alimentation du conduit 20 d'amenée de l'air desséché à la tubulure d'introduction dans l'enceinte fermée entourant le mandrin, la torche à plasma et l'injecteur de réactifs.

Une telle ligne de traitement permet d'obtenir de l'air de teneur résiduaire en vapeur d'eau ne dépassant pas une partie par million en volume. On peut réaliser de ce fait des dépôts de silice, dopée ou non, de teneur en ions hydroxyles inférieure à une partie par million, et typiquement de l'ordre de 0,1 partie par million, utilisables pour la fabrication de fibres optiques de coefficients d'affaiblissement linéaire très faibles.

## Revendications

1. Procédé de dépôt externe par plasma sur un barreau (17, 22) de silice sensiblement exempte d'ions hydroxyles, éventuellement dopée en vue de modifier son indice de réfraction, par réaction sur de l'oxygène d'un composé du silicium, et éventuellement de composés dopants, en présence d'un plasma de gaz (16) porté à très haute température par induction à l'aide d'un générateur à haute fréquence (15), le barreau sur lequel est effectué le dépôt de silice étant maintenu dans une enceinte étanche (19) séparée de l'atmosphère ambiante,
caractérisé en ce que ladite enceinte est alimentée (20) en air atmosphérique que l'on soumet successivement à une filtration (31), à une compression (32) et à une réfrigération (33), à une purge de l'eau condensée (35), puis à une dessiccation finale par adsorption (36, 38).

2. Dispositif pour la mise en oeuvre du procédé selon la revendication 1, comprenant un barreau de réception du dépôt de silice (17, 22), un support (18, 23) assurant sa rotation et sa translation, une torche (13) d'arrivée de gaz plasmagène, une bobine d'induction (14) alimentée par un générateur à haute fréquence (15) autour de l'extrémité de la torche, et une buse d'injection (12A) vers le barreau d'un mélange d'oxygène et d'un composé du silicium, et éventuellement de composés dopants, l'ensemble de ces organes étant disposé à l'intérieur d'une enceinte étanche (19) séparée de l'atmosphère ambiante, caractérisé en ce que ladite enceinte est alimentée en air atmosphérique par un conduit muni d'au moins un filtre (31, 39), un compresseur (32), un réfrigérant (33), un purgeur de l'eau condensée (35) et au moins un lit adsorbeur de l'humidité résiduelle (36, 38).

## Patentansprüche

1. Verfahren zum Plasmabeschichten der Außenseite eines Barrens (17, 22) mit Siliziumoxid, das weitestgehend frei von Hydroxylionen und ggf. dotiert ist, um den Brechungsindex zu modifizieren, wobei das Verfahren durch Reaktion einer Siliziumverbindung und ggf. von Dotierungsstoffen mit Sauerstoff in Gegenwart eines Gasplasmas erfolgt, das durch Induktion mit Hilfe eines Hochfrequenzgenerators (15) auf sehr hohe Temperatur gebracht ist, wobei der Barren, auf dem das Siliziumoxid abgeschieden werden soll, in einem geschlossenen Behälter (19) getrennt von der Außenatmosphäre gehalten wird, dadurch gekennzeichnet, daß der Behälter mit Umgebungsluft gespeist wird (20), die nacheinander gefiltert (31), komprimiert (32), gekühlt (33), von Wasserkondensat befreit (35) und dann einer endgültigen Adsorptionstrockung (36, 38) unterworfen wird.

2. Vorrichtung zur Durchführung des Verfahrens nach Anspruch 1, die einen Barren, auf den die Siliziumoxidschicht aufgebracht werden soll (17, 22), einen Träger (18, 23), der den Barren in Drehung und in transiatorische Bewegung versetzt, einen Brenner (13), dem ein plasmaerzeugendes Gas zugeführt wird, eine Induktionsspule (14), die von einem Hochfrequenzgenerator (15) gespeist wird und um das Ende des Brenners herum angeordnet ist, und eine Einspeisedüse (12A) zum Zuführen einer Mischung aus Sauerstoff und einer Siliziumverbindung, und ggf. von Dotierungsstoffen zum Barren enthält, wobei all diese Organe in einem dichten Behälter (19) angeordnet sind, der gegen die Umgebungsatmosphäre abgeschlossen ist, dadurch gekennzeichnet, daß der Behälter mit atmosphärischer Luft über eine Leitung gespeist wird, die mindestens ein Filter (31, 39), einen Kompressor (32), einen Kühler (33), eine Wasserkondensatfalle (35) und mindestens ein Adsorberbett für Restfeuchtigkeit (36, 38) enthält.

## Claims

1. A method for plasma coating the outside of a rod (17, 22) with silica, which is substantially free from hydroxyl ions and which is possibly doped in view of modifying its refraction index, the method incorporating the reaction of a silicium compound and possibly doping compounds with oxygen in the presence of a gas plasma (16) which is induction-heated to a very high temperature by means of a high frequency generator (15), the rod on which the silica coating is to be effected being enclosed in a sealed chamber separated from the surrounding atmosphere, characterized in that said chamber is supplied (20) with air from the atmosphere which is successively submitted to filtration (31), a compression (32), a cooling operation (33), a condensation water drain (35) and then a final desiccation by adsorption (36, 38).

2. A device for implementing the method according to claim 1, comprising a rod for receiving the silica coating (17, 22), a rig (18, 23) ensuring its rotation and its translation, a torch (13) supplying a plasmagene gas, an induction coil (14) supplied by a high frequency generator (15) around the end of the torch, and a nozzle (12A) for projecting towards the rod a mixture of oxygen and a silicium compound and possibly doping compounds, all these components being disposed in a sealed chamber (19) which is separated from the surrounding atmosphere, characterized in that said chamber is fed with atmospheric air by piping means equipped with at least one filter (31, 39), a compressor (32), a cooling device (33), a condensation water drain (35) and at least one residual moisture adsorption bed (36, 38).
